# FASCICULE DE BREVET EUROPEEN

(11) **EP 3 181 496 B1**
(45) Date de publication et mention de la délivrance du brevet: **12.12.2018**
(21) Numéro de dépôt: 16306677.2
(22) Date de dépôt: 14.12.2016
(51) Int. Cl.: B65G 47/86

(54) **PINCE DE PREHENSION D'UN CORPS CREUX TEL QU'UNE PREFORME DE RECIPIENT OU UN RECIPIENT**
GREIFZANGE EINES HOHLKÖRPERS, WIE EINE VORFORM EINES BEHÄLTERS ODER EIN BEHÄLTER
CLAMP FOR GRIPPING A HOLLOW BODY SUCH AS A CONTAINER PREFORM OR CONTAINER

(30) Priorité: 16.12.2015 FR 1562496
(43) Date de publication de la demande: 21.06.2017
(73) Titulaire: Sidel Participations, 76930 Octeville-sur-Mer (FR)
(72) Inventeur: LEROUX, Julien, 76600 Le Havre (FR)
(74) Mandataire: Grassin d'Alphonse, Emmanuel Jean Marie

(56) Documents cités:
- EP-A1- 1 375 395
- EP-A1- 2 360 109
- EP-A1- 2 881 345
- WO-A1-2011/103889
- WO-A1-2013/064198
- US-A1- 2012 086 229

## Description

L'invention a trait au transport des corps creux, et plus particulièrement au transport des préformes dans une ligne de production de récipients en matière plastique (tels que bouteilles, flacons, bidons) ou au transport des récipients eux-mêmes.

Plus précisément, l'invention concerne une pince de préhension d'un corps creux, destinée typiquement à être montée à la périphérie d'une roue de transfert. Une telle pince est généralement équipée d'une paire de mors mobiles entre une position de préhension dans laquelle les mors sont rapprochés pour retenir (et suspendre) le corps creux, et une position de libération dans laquelle les mors sont écartés pour permettre la libération du corps creux.

Compte tenu de la vitesse de rotation de la roue, proportionnelle à la cadence de production (de plusieurs dizaines de milliers de récipients par heure à l'heure actuelle, ce qui représente quelques milliers de cycles d'ouverture fermeture pour chaque pince), la pince doit répondre à un cahier des charges strict :
- le corps creux doit être maintenu à la fois fermement et sans risque d'endommagement,
- les mouvements d'ouverture et de fermeture de la pince doivent être réalisés sans à-coups,
- la masse de la pince doit être contenue, de façon à limiter l'inertie de la roue.

On connaît de nombreux modèles de pinces.

Ainsi, un premier type connu de pince est équipé d'un ressort qui sollicite la pince en position fermée, et d'un galet circulant sur un chemin de came, qui, par l'intermédiaire d'un mécanisme de transmission à biellette (cf. par ex. EP 2 686 259 ou son équivalent américain US 2014/008927, tous deux au nom de Sidel) ou à engrenage (cf. par ex. EP 1 867 600, également au nom de Sidel), commande l'ouverture des mors à l'encontre de la force de rappel du ressort.

Ce premier type de pince a fait ses preuves mais ne va cependant pas sans inconvénients, principalement liés à la présence du ressort. D'abord, le ressort alourdit la pince. Ensuite, les nombreux efforts de compression et détente répétés (plusieurs dizaines de milliers de cycles par jour de production) entraînent une fatigue mécanique susceptible de provoquer une casse du ressort. Enfin, il est complexe de bien dimensionner le ressort, qui doit être suffisamment raide pour permettre une fermeture rapide de la pince (nécessaire pour éviter que le corps creux ne s'échappe, mais au prix d'une masse plus élevée), tout en étant assez souple pour faciliter l'introduction du corps creux (nécessaire pour limiter les risques de rayures ou d'endommagement des corps creux, au prix d'une plus grande lenteur de fonctionnement, susceptible de limiter les cadences).

Un deuxième type de pince, connu du document WO 2013/064198A1 (KHS), fait l'économie du mécanisme de transmission en lui substituant un éjecteur coulissant pourvu d'aimants qui, placés en regard d'aimants en opposition magnétique intégrés au mors, sollicitent ceux-ci vers leur position de libération.

Ce deuxième type de pince a l'avantage de faciliter l'ouverture de la pince grâce aux aimants en opposition magnétique, mais il ne fait cependant pas l'économie d'un ressort de rappel qui sollicite les mors vers leur position de préhension. Les problèmes précités ne sont donc pas résolus.

Le document US2012/0086229A1 divulgue une pince de préhension d'un corps creux selon le préambule des revendications 1 et 7.

Un premier objectif est d'alléger les pinces de préhension des corps creux.

Un deuxième objectif est d'améliorer la fiabilité des pinces de préhension des corps creux.

Un troisième objectif est, plus précisément, de proposer une pince de préhension dépourvue de ressort (c'est-à-dire d'un organe mécanique de rappel élastique).

A cet effet, il est proposé une pince de préhension d'un corps creux telle que revendiquée dans la revendication 1, et une pince de préhension d'un corps creux telle que revendiquée dans la revendication 7.

Grâce à cette architecture, et en particulier grâce à la conception du dispositif de rappel magnétique, la pince est dépourvue de ressort. Il en résulte un allégement de la pince, au bénéfice de l'inertie de la roue qui en est équipée, de sa fiabilité (pas de casse de ressort) et de la cadence de production qui peut être accélérée.

Diverses caractéristiques supplémentaires peuvent être prévues, seules ou en combinaison :
- chaque biellette est, par une extrémité externe, articulée par rapport à un mors et, par une extrémité interne, articulée par rapport à l'actionneur ;
- le dispositif de rappel magnétique comprend une paire d'aimants fixes disposés de part et d'autre de l'actionneur, en regard de l'aimant mobile ;
- l'aimant mobile est sphérique ;
- par leurs extrémités internes, les biellettes sont articulées par rapport à l'actionneur autour d'un axe commun ;
- la pince comprend un galet solidaire de l'actionneur, apte à coopérer avec une came ;

D'autres objets et avantages de l'invention apparaîtront à la lumière de la description d'un mode de réalisation, faite ci-après en référence aux dessins annexés dans lesquels :
- la figure 1 est une vue en perspective d'une roue de transfert équipée, sur sa périphérie, d'une série de pinces de préhension ;
- la figure 2 est une vue de dessus d'une pince de préhension, représentée en configuration ouverte, mors écartés ;
- la figure 3 est une vue similaire à la figure 2, montrant la pince en configuration fermée, mors rapprochés ;
- la figure 4 est une vue de dessous de la pince de la figure 2, en configuration ouverte ;
- la figure 5 est une vue de dessous de la pince de la figure 3, en configuration fermée ;
- la figure 6 est une vue en coupe en perspective, montrant la pince de la figure 2 en configuration ouverte ;
- la figure 7 est une vue en coupe en perspective, montrant la pince de la figure 3 en configuration fermée ;
- la figure 8 est une vue de détail en coupe illustrant le dispositif de rappel magnétique en configuration ouverte de la pince ;
- la figure 9 est une vue similaire à la figure 8, montrant le dispositif de rappel magnétique en configuration fermée de la pince ;
- la figure 10 est une vue schématique de dessus illustrant une pince de préhension selon un autre mode de réalisation, représentée en configuration ouverte, mors écartés ;
- la figure 11 est une vue similaire à la figure 10, montrant la pince en configuration fermée, mors rapprochés.

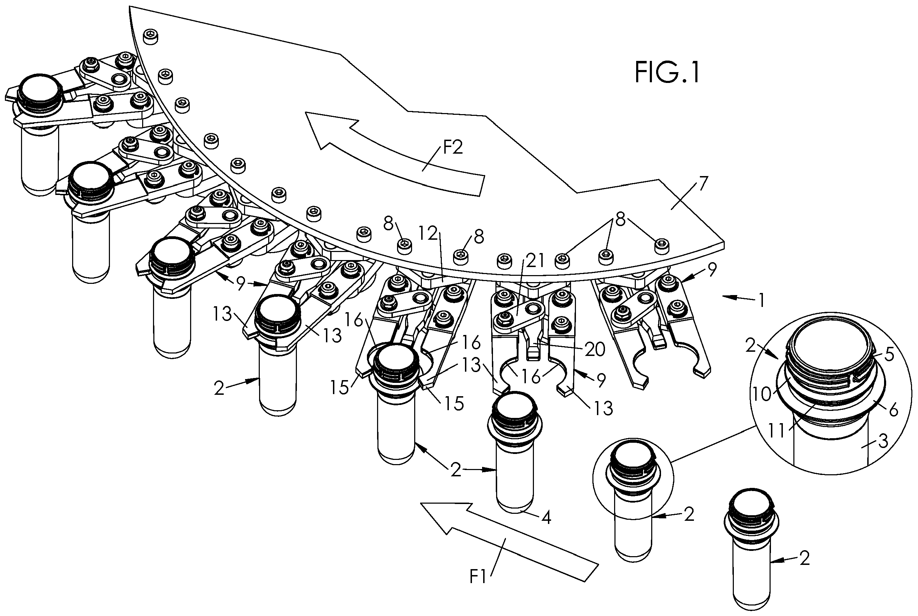

Sur la figure 1 est représentée une roue **1** de transfert de corps creux **2** intégrée à une ligne de production de récipients. Dans ce qui suit, les corps creux **2** représentés sont des préformes, à partir desquelles des récipients doivent être formés par soufflage ou étirage soufflage, la roue étant par exemple une roue d'amenée de préformes dans une souffleuse. La référence **2** sera employée par la suite pour désigner une ou plusieurs préforme(s), mais la roue **1** pourrait être employée pour transporter d'autres types de corps creux, par ex. des récipients intermédiaires (ébauches) ou des récipients complètement formés à leur sortie d'une souffleuse.

Chaque préforme **2** comprend un corps **3** cylindrique fermé par un fond **4** hémisphérique, et, à l'opposé du fond **4,** un col **5** ouvert séparé du corps **3** par une collerette **6** en saillie radiale.

Comme on le voit sur la figure 1, la roue **1** comprend un disque **7** à la périphérie duquel sont montées (en étant fixées par ex. au moyen de vis **8**) des pinces **9** régulièrement espacées, configurées pour saisir les préformes **2** par leur col **5.** Selon un mode de réalisation illustré sur la figure 1, chaque préforme **2** est pourvue d'une nervure **10** périphérique surmontant la collerette **6** et qui définit avec celle-ci une rainure **11** destinée à accueillir une bague d'inviolabilité intégrée à un bouchon de fermeture du récipient une fois celui-ci rempli. Cette rainure **11** est, dans l'exemple illustré, mise à profit pour réaliser la saisie des préformes **2.** Dans un autre mode d'utilisation (non représenté), la pince peut saisir la préforme sous la collerette **6** (située sous le col **5**).

Chaque pince **9** comprend, en premier lieu, un corps **12** de pince par lequel la pince **9** est fixée sur le disque **7** de la roue **1** au moyen des vis **8.** Le corps **12** de pince est avantageusement réalisé dans un alliage d'aluminium ou dans une matière plastique à hautes performances, notamment dans un polyacétal, typiquement en polyoxyméthylène (POM).

La pince **9** comprend, en deuxième lieu, une paire de mors **13** montés articulés par rapport au corps **12** de pince autour d'axes **A1, A2** de rotation respectifs parallèles, entre :
- une position de libération (à droite sur la figure 1 ; figure 2 ; figure 4), dans laquelle les mors **13** sont écartés l'un de l'autre pour accueillir une préforme **2** à un point de charge et la libérer à un point de décharge ;
- une position de préhension (à gauche sur la figure 1 ; figure 3 ; figure 5), dans laquelle les mors **13** sont rapprochés l'un de l'autre et définissent un logement **14** pour la préforme **2** de façon à enserrer celle-ci à partir du point de charge et jusqu'au point de décharge.

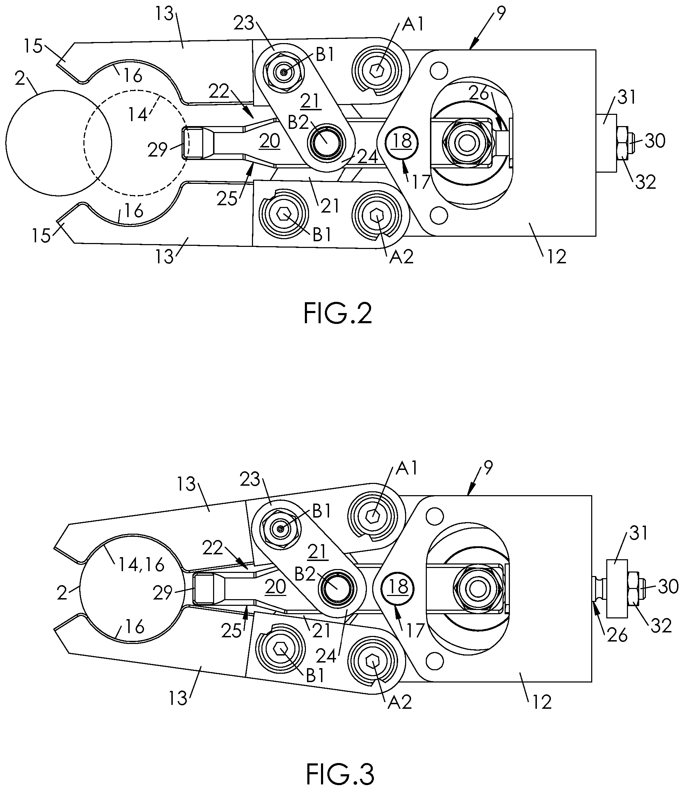

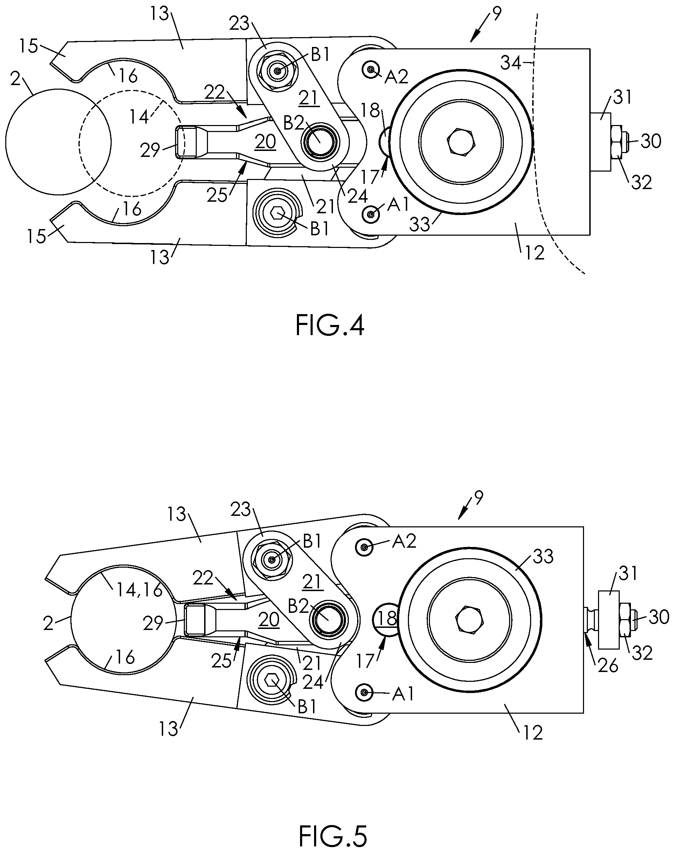

Le logement **14** défini par les mors **13** en position de préhension est adapté au contour de la zone de saisie de la préforme **2.** En l'espèce, ce contour est circulaire ; c'est donc par un cercle que l'on a représenté le logement **14** sur les figures 2 et 4 (en pointillés) et sur les figures 3 et 5 (en trait plein, confondu avec le contour de la zone de saisie de la préforme **2**). A cet effet, chaque mors **13** présente, du côté d'une extrémité **15** frontale, une échancrure **16** en arc de cercle dont le rayon correspond à celui de la préforme **2** au niveau de son col **5** (ou sous sa collerette **6**).

Les mors **13** sont avantageusement réalisés dans une matière métallique, par ex. en acier ou dans un alliage d'aluminium.

La pince **9** comprend, en troisième lieu, un dispositif **17** de rappel magnétique incluant au moins une paire d'aimants **18, 19** en opposition magnétique, aptes à solliciter les mors **13** vers leur position de préhension ou, inversement, vers leur position de libération, comme nous le verrons ci-après.

Plus précisément, le dispositif **17** de rappel magnétique comprend :
- au moins un aimant **18** fixe, solidaire du corps **12** de pince, dont les pôles magnétiques sont respectivement et arbitrairement notés N (nord) et S (sud), et ayant un axe **M1** magnétique primaire (N-S) parallèle à l'axe **A1** (respectivement **A2**) de rotation des mors **13,**
- au moins un aimant **19** mobile par rapport au corps **12** de pince en étant couplé à l'un au moins des mors **13** (c'est-à-dire que le mouvement de l'aimant **19** mobile est couplé à celui de ce mors **13**), ayant un axe **M2** magnétique secondaire (N-S) parallèle à l'axe **A1** (respectivement **A2**) de rotation des mors **13** (et donc à l'axe **M1** magnétique de l'aimant **18** fixe).

Chaque aimant **19** mobile est déplaçable, par rapport au corps **12** de pince (et donc par rapport à l'aimant **18** fixe), entre :
- une première position extrême dans laquelle l'aimant **19** mobile est désaxé par rapport à l'aimant **18** fixe et sollicite le (ou les) mors **13** vers la position de libération, et
- une deuxième position extrême dans laquelle l'aimant **19** mobile est désaxé par rapport à l'aimant **18** fixe dans une direction opposée à la première position extrême et sollicite au moins le (ou les) mors **13** vers la position de préhension.

Selon un premier mode de réalisation, illustré sur les figures 2 à 9, la pince **9** comprend un actionneur **20** portant l'aimant **19** mobile, et une paire de biellettes **21** couplant chacune un mors **13** à l'actionneur **20.** L'actionneur **20** et les biellettes **21** forment ainsi conjointement un mécanisme **22** de transmission commandant l'ouverture et la fermeture des mors **13.**

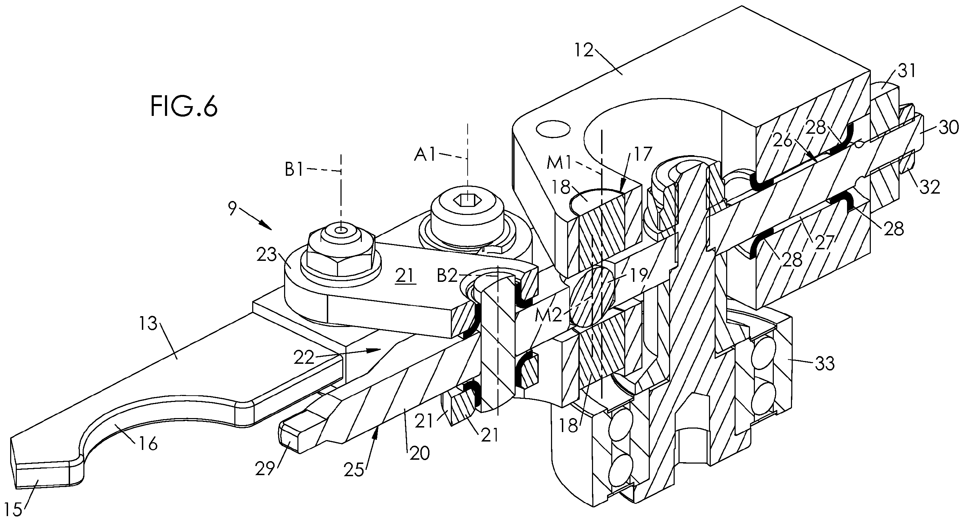

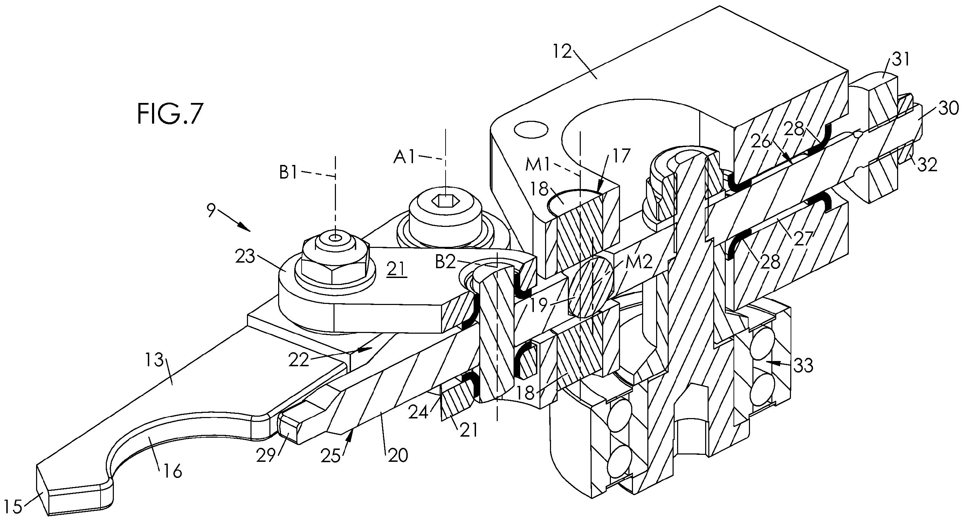

Plus précisément, chaque biellette **21** est, par une extrémité **23** externe, articulée à un mors **13** autour d'un axe **B1** externe parallèle à l'axe **A1** (respectivement **A2**) d'articulation du mors **13,** et, par une extrémité **24** interne, articulée par rapport à l'actionneur **20** autour d'un axe **B2** interne parallèle à l'axe **B1** externe. Selon un mode de réalisation préféré, illustré sur les figures 6 et 7, l'axe **B2** interne est commun aux deux biellettes **21.** Dans ce cas, et comme cela est visible sur les figures 6 et 7, les biellettes **21** sont avantageusement disposées de part et d'autre de l'actionneur **20,** lequel est traversé par l'axe **B2** interne (qui, en pratique, se présente sous forme d'une goupille).

Dans l'exemple illustré, l'actionneur **20** se présente sous forme d'une tige, avantageusement réalisée dans une matière métallique (par ex. en acier ou dans un alliage d'aluminium). L'actionneur **20** présente une section **25** frontale qui s'étend entre les mors **13** et sur laquelle sont articulées les biellettes **21,** et une section **26** distale par laquelle l'actionneur **20** est monté coulissant dans un alésage **27** formé dans le corps **12** de pince, avec, de préférence, interposition de bagues **28** d'usure réalisées dans un matériau à faible coefficient de friction, par ex. en laiton.

L'actionneur **20** est ainsi monté déplaçable en translation par rapport au corps **12** de pince entre :
- une position déployée, correspondant à la position de libération des mors **13** (figure 2), dans laquelle l'aimant **19** mobile est dans sa première position extrême et dans laquelle une extrémité **29** frontale de l'actionneur fait saillie dans le logement **14** ;
- une position rétractée, correspondant à la position de préhension des mors **13,** dans laquelle l'aimant **19** mobile est dans sa deuxième position extrême et dans laquelle l'actionneur **20** est en retrait par rapport au logement **14.**

Comme on le voit bien sur les figures 2 à 5, l'actionneur **20** porte, à une extrémité **30** distale qui fait saillie du corps de pince à l'opposé de l'extrémité **29** frontale, une rondelle **31** fixée par un écrou **32.** Cette rondelle **31,** d'un diamètre supérieur à celui de l'alésage **27,** forme une butée de fin de course qui bloque unilatéralement l'actionneur **20** en position déployée, lequel bloque à son tour unilatéralement les mors **13** en position de libération (figures 2, 4, 6).

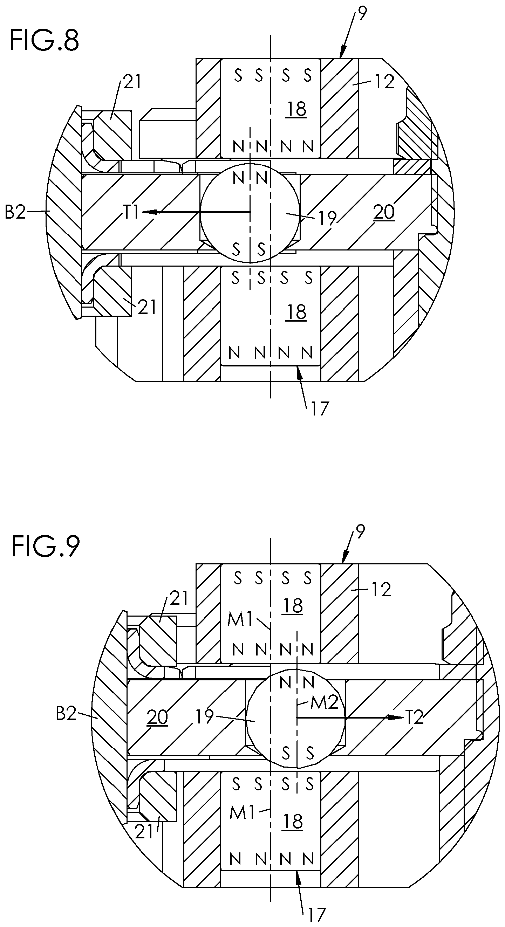

On voit sur les figures 6 et 8 que, dans cette position, l'axe **M2** magnétique secondaire est décalé de l'axe **M1** magnétique primaire en direction de l'extrémité **29** frontale de l'actionneur **20,** c'est-à-dire en direction des mors **13.** Compte tenu de ce décalage et de l'opposition magnétique dans laquelle se trouvent les aimants **18, 19** (leurs pôles de même signe se faisant face), l'aimant **19** mobile est soumis à un effort ayant non seulement une composante parallèle aux axes **M1, M2** magnétiques (composante axiale), mais également une composante perpendiculaire aux axes **M1, M2** (dite composante transversale), dirigée dans la direction du décalage de l'axe **M2** magnétique secondaire par rapport à l'axe **M1** magnétique primaire, c'est-à-dire, en l'espèce, dans la direction favorisant l'ouverture des mors **13.**

Selon un mode de réalisation préféré illustré sur les figures 6 et 8, le dispositif **17** de rappel magnétique comprend une paire d'aimants **18** fixes solidaires du corps **12** de pince, disposés de part et d'autre de l'actionneur **20,** en regard de l'aimant **19** mobile et en opposition magnétique de celui-ci. Ces deux aimants **18** fixes sont avantageusement identiques et coaxiaux, et sont distants de l'aimant **19** mobile d'un même entrefer.

Dans ce cas, les composantes axiales des efforts exercés par les aimants **18** fixes sur l'aimant **19** mobile s'annulent, puisque de même valeur et de directions opposées (équilibrant ainsi le mouvement de l'actionneur), tandis que les composantes transversales s'additionnent pour former une composante transversale **T1** globale augmentant l'effort moteur utile exercé sur l'actionneur **20.**

En position rétractée, l'actionneur **20** est, à l'inverse, bloqué unilatéralement par les mors **13,** eux-mêmes bloqués unilatéralement en position de préhension par la préforme **2** qu'ils enserrent.

On voit sur les figures 7 et 9 que, dans cette position, l'axe **M2** magnétique secondaire est décalé de l'axe **M1** magnétique primaire en direction de l'extrémité **30** distale de l'actionneur **20,** c'est-à-dire à l'opposé des mors **13.** Compte tenu de ce décalage et de l'opposition magnétique dans laquelle se trouvent les aimants **18, 19** (leurs pôles de même signe, N, respectivement S, se faisant face), l'aimant **19** mobile est soumis à un effort ayant non seulement une composante parallèle aux axes **M1, M2** (composante axiale), mais également une composante perpendiculaire aux axes **M1, M2** (composante transversale), dirigée dans la direction du décalage de l'axe magnétique secondaire par rapport à l'axe **M1** magnétique primaire, c'est-à-dire, en l'espèce, dans la direction favorisant la fermeture des mors **13.**

De même que précédemment, dans le cas où, comme dans l'exemple illustré, le dispositif **17** de rappel magnétique comprend une paire d'aimants **18** fixes solidaires du corps **12** de pince, disposés de part et d'autre de l'actionneur **20,** en regard de l'aimant **19** mobile et en opposition magnétique de celui-ci, les composantes axiales des efforts exercés par les aimants **18** fixes sur l'aimant **19** mobile s'annulent, puisque de même valeur et de directions opposées, tandis que les composantes transversales s'additionnent pour former une composante **T2** transversale globale augmentant l'effort moteur utile exercé sur l'actionneur **20.**

Ainsi, le dispositif **17** de rappel magnétique exerce sur l'actionneur **20** (et donc sur les mors **13**) :
- en position de libération des mors **13,** un effort de rappel tendant à les ouvrir ; il en résulte que la position de libération est stable, la rondelle **31** assurant le blocage unilatéral de l'actionneur **20** (et donc des mors **13**) dans cette position ;
- en position de préhension des mors **13,** un effort de rappel tendant à les resserrer ; il en résulte que cette position aussi est stable, la préforme **2** assurant le blocage unilatéral des mors **13** (et donc de l'actionneur **20**) dans cette position.

Ainsi, la pince **9** est bistable : stable en position de libération des mors **13** et stable en position de préhension. Le dispositif **17** de rappel magnétique agit ainsi comme un couple de ressorts de rappel coaxiaux qui seraient alternativement activés / inhibés.

L'inversion du sens de l'effort de rappel exercé sur l'actionneur **20** (via l'aimant **19** mobile) se produit lorsque l'axe **M1** magnétique et l'axe **M2** magnétique sont momentanément confondus lors du passage (forcé) de l'actionneur **20** de sa position déployée à sa position rétractée, ou réciproquement. On nomme « point mort » la position (instable) de l'actionneur **20** où l'axe **M1** magnétique et l'axe **M2** magnétique sont confondus.

Il est avantageux de favoriser l'instabilité du point mort, de façon à limiter les efforts qu'il est nécessaire d'exercer sur l'actionneur **20** pour forcer son passage de sa position déployée à sa position rétractée et réciproquement. A cet effet, il est avantageux que l'aimant **19** mobile soit sphérique, ce qui limite le pic d'effort transversal au voisinage du point mort (axes **M1, M2** presque confondus) tout en affectant peu la valeur des efforts exercés sur l'actionneur **20** par le dispositif **17** de rappel magnétique en position rétractée ou déployée.

En partant de la position de libération, la fermeture des mors **13** est provoquée par l'appui de la préforme **2** contre l'extrémité **29** frontale de l'actionneur **20.** Celui-ci est dimensionné pour que son extrémité **29** frontale fasse saillie dans le logement **14** d'une distance supérieure au décalage de l'axe **M2** magnétique secondaire par rapport à l'axe **M1** magnétique primaire. De la sorte, lorsque la préforme **2** se trouve correctement positionnée dans son logement **14,** l'actionneur **20** a passé son point mort et se trouve sollicité vers sa position rétractée par l'effort de rappel exercé par le dispositif **17** de rappel magnétique, ce qui, via le mécanisme **22** de transmission, vient resserrer les mors en position de préhension autour de la préforme **2.**

A l'inverse, en partant de la position de préhension, l'actionneur **20** est écarté de sa position rétractée jusqu'à passer le point mort. Dès lors, l'effort de rappel exercé par le dispositif **17** de rappel magnétique sur l'actionneur **20** tend à le déplacer vers sa position déployée. Tandis que, via le mécanisme **22** de transmission, les mors **13** sont écartés vers leur position de libération, l'extrémité **29** frontale de l'actionneur **20** pénètre dans le logement **14** et repousse la préforme **2** pour favoriser son éjection de la pince **9.**

A cet effet, la pince **9** est avantageusement munie d'un galet **33** solidaire de l'actionneur **20,** apte à coopérer avec une came **34** (schématisée en pointillés sur la figure 4), positionnée localement au voisinage du point de décharge de la roue **1.**

Cette came **34** demeure toutefois de faible dimension puisque la pince **9** est stable dans ses deux positions, ouverte (correspondant à la position de libération des mors **13**) et fermée (correspondant à la position de préhension des mors **13**). Il n'est donc pas nécessaire de disposer d'un chemin de came courant sur toute la périphérie de la roue **1.**

Chaque préforme **2** parvenant tangentiellement (selon la direction indiquée sur la figure **1** par la flèche **F1**) au point de charge vient se positionner entre les mors **13** ouverts d'une pince **9** au fur et à mesure de la rotation de la roue (dans le sens indiqué sur la figure 1 par la flèche **F2**). L'appui de la préforme **2** contre l'extrémité **29** frontale de l'actionneur 20 provoque alors, comme décrit ci-dessus, la fermeture des mors **13** sur la préforme **2** et l'immobilisation de celle-ci dans la pince **9.**

Diverses modifications peuvent être apportées à la pince **9** qui vient d'être décrite. En particulier, il est envisageable, pour accroître les efforts exercés sur les mors **13** notamment en position de préhension, de la munir d'au moins deux aimants mobiles (et au moins autant d'aimants fixes correspondants). On peut ainsi monter une série d'aimants **19** mobiles dans l'actionneur **20,** et une série d'aimants **18** fixes, en opposition magnétique des aimants **19** mobiles, dans le corps **12** de pince.

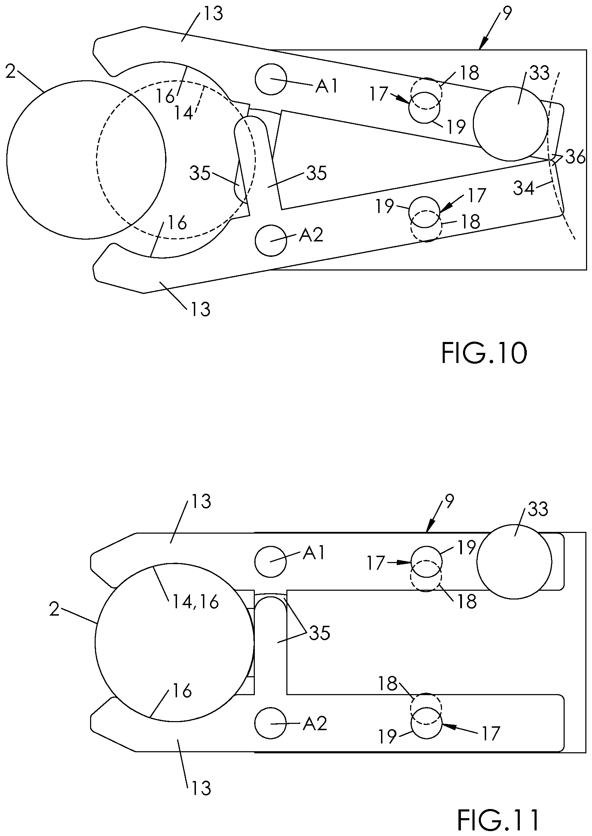

Selon un deuxième mode de réalisation, illustré sur les figures 10 et 11, la pince **9** est dépourvue d'actionneur **20** coulissant ; chaque mors **13** porte un aimant **19** mobile et est solidaire d'un levier **35** qui, en position de préhension du mors **13,** est en retrait par rapport au logement **14** et qui, en position de libération du mors **13,** fait saillie dans le logement **14.**

Dans l'exemple illustré, les leviers **35** se chevauchent, la préforme **2** les repoussant conjointement lorsqu'elle vient se positionner dans son logement **14.** Dans cet exemple, les leviers **35** s'étendent dans le prolongement des axes **A1, A2** de rotation des mors **13,** mais ils pourraient être décalés par rapport à ceux-ci.

Le corps **12** de pince intègre un aimant **18** fixe en regard de chaque aimant **19** mobile, en opposition magnétique de celui-ci. La trajectoire des aimants **19** mobile est circulaire mais, compte tenu de sa faible amplitude angulaire au regard de l'entraxe entre l'axe **A1** (respectivement **A2**) de rotation du mors **13** et l'aimant **19** mobile, cette trajectoire peut être considérée quasi-linéaire. Bien que la pince **9** soit dépourvue de mécanisme de transmission, le principe de fonctionnement est le même que celui de la pince décrite précédemment. La pince **9** est bistable, les mors **13** étant sollicités alternativement vers leur ouverture ou vers leur fermeture selon leur position (respectivement de libération, figure 10, ou de préhension, figure 11), par l'effort de rappel généré par le dispositif **17** de rappel magnétique.

A partir de la position de libération, la fermeture de la pince **9** est réalisée par l'enfoncement dans son logement **14** de la préforme **2** qui vient repousser les leviers **35,** lesquels font ainsi pivoter les mors **13** autour de leurs axes **A1, A2** de rotation respectifs jusqu'à dépasser le point mort (axes magnétiques des aimants **18 19** confondus). Dès lors, l'effort de rappel exercé par le dispositif **17** de rappel magnétique exerce sur chaque mors **13** un couple qui tend à le resserrer autour de la préforme **2.** La position de préhension est stable, la préforme **2** elle-même réalisant une butée unilatérale limitant la course des mors **13.**

A l'inverse, à partir de la position de préhension, un effort exercé sur au moins l'un des mors **13** est nécessaire pour en provoquer l'ouverture. Dans l'exemple illustré, l'un des mors **13** porte un galet **33** apte à coopérer avec une came **34** (en pointillés sur la figure 10) localisée au voisinage du point de décharge de la roue **1.** La coopération du galet **33** avec la came **34** provoque le pivotement de ce mors **13** (et donc l'éjection de la préforme **2** via le levier **35,** la préforme **2** elle-même provoquant le pivotement de l'autre mors **13** et donc contribuant à sa propre éjection via le levier **35** correspondant), à l'encontre de l'effort de rappel du dispositif **17** de rappel magnétique, jusqu'au passage du point mort. Dès lors, l'effort de rappel s'inverse et contribue à l'ouverture des mors **13** (et donc à l'éjection de la préforme **2** via les leviers **35**), jusqu'à ce que la position de libération soit atteinte. La course des mors **13** est limitée unilatéralement, dans cette position, par leur butée l'un contre l'autre à des extrémités **36** arrière, comme illustré sur la figure 10.

La pince **9** qui vient d'être décrite procure plusieurs avantages.

D'abord, elle est dépourvue de ressort mécanique, au bénéfice de son poids. Les aimants **18, 19** ont certes un poids mais il est possible de le minimiser, par ex. en utilisant des aimants en terres rares, de type néodyme-fer-bore, qui génèrent des champs magnétiques puissants et durables pour un poids contenu.

La diminution du poids de la pince **9** permet de réduire l'inertie de la roue **1,** au bénéfice, d'abord, de sa fiabilité et de sa durabilité et, ensuite, des cadences de production.

Ensuite, l'effet ressort procuré par le dispositif **17** de rappel magnétique étant réalisé sans contact, il en résulte une diminution des zones de frottement par contact au sein de la pince **9** (en particulier, il n'y a pas de contact entre les aimants **18, 19**). Il en résulte une diminution de l'usure et de la fatigue mécanique des composants mobiles de la pince **9,** au bénéfice de sa fiabilité et de sa durabilité.

Enfin, la pince **9** étant bistable, l'action du galet **33** sur la came **34** peut être limitée à une zone de la roue **1** circonscrite au voisinage du point de décharge, au bénéfice de la réduction de l'usure, de la simplicité et de la fiabilité de l'ensemble de la ligne de production.

## Revendications

1. Pince (**9**) de préhension d'un corps creux (**2**), qui comprend :
- un corps (**12**) de pince ;
- une paire de mors (**13**) montés articulés par rapport au corps (**12**) de pince autour d'axes (**A1, A2**) de rotation respectifs parallèles, entre une position de libération dans laquelle les mors (**13**) sont écartés l'un de l'autre pour accueillir ou libérer un corps creux (**2**), et une position de préhension dans laquelle les mors (**13**) sont rapprochés l'un de l'autre et définissent un logement (**14**) pour le corps creux (**2**) de façon à enserrer celui-ci ;
- un dispositif (**17**) de rappel magnétique comprenant au moins une paire d'aimants (**18, 19**) en opposition magnétique, aptes à solliciter les mors (**13**) vers leur position de libération ou, inversement, vers leur position de préhension ;
- dans lequel le dispositif (**17**) de rappel magnétique comprend au moins un aimant (**18**) fixe solidaire du corps (**12**) de pince, ayant un axe (**M1**) magnétique parallèle à l'axe (**A1, A2**) de rotation des mors (**13**), et au moins un aimant (**19**) mobile couplé à l'un au moins des mors (**13**), ayant un axe (**M2**) magnétique parallèle à l'axe (**A1, A2**) de rotation des mors (**13**) ;
et dans lequel chaque aimant (**19**) mobile est déplaçable par rapport au corps (**12**) de pince entre une première position extrême dans laquelle l'aimant (**19**) mobile est désaxé par rapport à l'aimant (**18**) fixe et sollicite au moins l'un des mors (**13**) vers sa position de libération, et une deuxième position extrême dans laquelle l'aimant (**19**) mobile est désaxé par rapport à l'aimant (**18**) fixe dans une direction opposée à la première position extrême et sollicite au moins ce mors (**13**) vers sa position de préhension,
**caractérisée en ce qu'**elle comprend :
- un actionneur (**20**) portant l'aimant (**19**) mobile, cet actionneur (**20**) étant déplaçable en translation par rapport au corps (**12**) de pince entre une position déployée, correspondant à la position de libération des mors (**13**), dans laquelle une extrémité (**29**) frontale de l'actionneur (**20**) fait saillie dans le logement (**14**), et une position rétractée, correspondant à la position de préhension des mors (**13**), dans laquelle l'actionneur (**20**) est en retrait par rapport au logement (**14**) ;
- une paire de biellettes (**21**) couplant chacune un mors (**13**) à l'actionneur (**20**).

2. Pince (**9**) selon la revendication précédente, **caractérisée en ce que** chaque biellette (**21**) est, par une extrémité (**23**) externe, articulée par rapport à un mors (**13**) et, par une extrémité (**24**) interne, articulée par rapport à l'actionneur (**20**).

3. Pince (**9**) selon la revendication précédente, **caractérisée en ce que**, par leurs extrémités (**24**) internes, les biellettes sont articulées par rapport à l'actionneur (**20**) autour d'un axe commun.

4. Pince (**9**) selon l'une des revendications précédentes, **caractérisée en ce que** le dispositif (**17**) de rappel magnétique comprend une paire d'aimants (**18**) fixes disposés de part et d'autre de l'actionneur (**20**), en regard de l'aimant (**19**) mobile.

5. Pince (**9**) selon la revendication précédente, **caractérisée en ce que** l'aimant (**19**) mobile est sphérique.

6. Pince (**9**) selon l'une des revendications précédentes, **caractérisée en ce qu'**elle comprend un galet (**33**) solidaire de l'actionneur (**20**), apte à coopérer avec une came (**34**).

7. Pince (**9**) de préhension d'un corps creux (**2**), qui comprend :
un corps (**12**) de pince ;
une paire de mors (**13**) montés articulés par rapport au corps (**12**) de pince autour d'axes (**A1, A2**) de rotation respectifs parallèles, entre une position de libération dans laquelle les mors (**13**) sont écartés l'un de l'autre pour accueillir ou libérer un corps creux (**2**), et une position de préhension dans laquelle les mors (**13**) sont rapprochés l'un de l'autre et définissent un logement (**14**) pour le corps creux (**2**) de façon à enserrer celui-ci ;
un dispositif (**17**) de rappel magnétique comprenant au moins une paire d'aimants (**18, 19**) en opposition magnétique, aptes à solliciter les mors (**13**) vers leur position de libération ou, inversement, vers leur position de préhension ;
dans lequel le dispositif (**17**) de rappel magnétique comprend au moins un aimant (**18**) fixe solidaire du corps (**12**) de pince, ayant un axe (**M1**) magnétique parallèle à l'axe (**A1, A2**) de rotation des mors (**13**), et au moins un aimant (**19**) mobile couplé à l'un au moins des mors (**13**), ayant un axe (**M2**) magnétique parallèle à l'axe (**A1, A2**) de rotation des mors (**13**) ;
et dans lequel chaque aimant (**19**) mobile est déplaçable par rapport au corps (**12**) de pince entre une première position extrême dans laquelle l'aimant (**19**) mobile est désaxé par rapport à l'aimant (**18**) fixe et sollicite au moins l'un des mors (**13**) vers sa position de libération, et une deuxième position extrême dans laquelle l'aimant (**19**) mobile est désaxé par rapport à l'aimant (**18**) fixe dans une direction opposée à la première position extrême et sollicite au moins ce mors (**13**) vers sa position de préhension,
**caractérisée en ce que** chaque mors (13) porte un aimant (**19**) mobile et est solidaire d'un levier (**35**) qui, en position de préhension du mors (**13**), est en retrait par rapport au logement (**14**) et qui, en position de libération du mors (**13**), fait saillie dans le logement (**14**).

## Patentansprüche

1. Zange (9) zum Greifen eines Hohlkörpers (2), umfassend:
- einen Zangenkörper (12);
- ein Paar Backen (13), die relativ zum Zangenkörper (12) um jeweilige parallele Rotationsachsen (A1, A2) angelenkt montiert sind, zwischen einer Freigabeposition, in der die Backen (13) voneinander weg gespreizt sind, um einen Hohlkörper (2) aufzunehmen oder freizugeben, und einer Greifposition, in der die Backen (13) einander angenähert sind und eine Aufnahme (14) für den Hohlkörper (2) definieren, um diesen zu umschließen;
- eine magnetische Rückstellvorrichtung (17), umfassend mindestens ein Paar Magnete (18, 19) mit entgegengesetzter magnetischer Ausrichtung, die fähig sind, die Backen (13) in Richtung ihrer Freigabeposition oder, umgekehrt, in Richtung ihrer Greifposition zu belasten;
- wobei die magnetische Rückstellvorrichtung (17) mindestens einen festen Magneten (18), der fest mit dem Zangenkörper (12) verbunden ist und eine Magnetachse (M1) aufweist, die parallel zur Rotationsachse (A1, A2) der Backen (13) ist, und mindestens einen beweglichen Magneten (19), der mit mindestens einer der Backen (13) gekoppelt ist und eine Magnetachse (M2) aufweist, die parallel zur Rotationsachse (A1, A2) der Backen (13) ist, umfasst;
und wobei jeder bewegliche Magnet (19) relativ zum Zangenkörper (12) verlagerbar ist zwischen einer ersten Endposition, in der der bewegliche Magnet (19) relativ zum festen Magneten (18) versetzt ist und mindestens eine der Backen (13) in ihre Freigabeposition belastet, und einer zweiten Endposition, in der der bewegliche Magnet (19) relativ zum festen Magneten (18) in einer zur ersten Endposition entgegengesetzten Richtung versetzt ist und mindestens diese Backe (13) in Richtung ihrer Greifposition belastet,
**dadurch gekennzeichnet, dass** sie Folgendes umfasst:
- ein Stellglied (20), das den beweglichen Magneten (19) trägt, wobei dieses Stellglied (20) relativ zum Zangenkörper (12) translatorisch verlagerbar ist zwischen einer ausgefahrenen Position, die der Freigabeposition der Backen (13) entspricht, in der ein vorderes Ende (29) des Stellglieds (20) in die Aufnahme (14) ragt, und einer eingefahrenen Position, die der Greifposition der Backen (13) entspricht, in der das Stellglied (20) relativ zur Aufnahme (14) zurückgezogen ist;
- ein Paar Schwingarme (21), die jede der Backen (13) mit dem Stellglied (20) koppeln.

2. Zange (9) nach dem vorhergehenden Anspruch, **dadurch gekennzeichnet, dass** jeder Schwingarm (21) an einem äußeren Ende (23) relativ zu einer Backe (13) angelenkt ist und an einem inneren Ende (24) relativ zum Stellglied (20) angelenkt ist.

3. Zange (9) nach dem vorhergehenden Anspruch, **dadurch gekennzeichnet, dass** die Schwingarme an ihren inneren Enden (24) relativ zum Stellglied (20) um eine gemeinsame Achse herum angelenkt sind.

4. Zange (9) nach einem der vorhergehenden Ansprüche, **dadurch gekennzeichnet, dass** die magnetische Rückstellvorrichtung (17) ein Paar feste Magnete (18) umfasst, die gegenüber dem beweglichen Magneten (19) beiderseits des Stellglieds (20) angeordnet sind.

5. Zange (9) nach dem vorhergehenden Anspruch, **dadurch gekennzeichnet, dass** der bewegliche Magnet (19) kugelförmig ist.

6. Zange (9) nach einem der vorhergehenden Ansprüche, **dadurch gekennzeichnet, dass** sie eine Rolle (33) umfasst, die fest mit dem Stellglied (20) verbunden ist und fähig ist, mit einem Nocken (34) zusammenzuwirken.

7. Zange (9) zum Greifen eines Hohlkörpers (2), umfassend:
einen Zangenkörper (12);
ein Paar Backen (13), die relativ zum Zangenkörper (12) um jeweilige parallele Rotationsachsen (A1, A2) angelenkt montiert sind, zwischen einer Freigabeposition, in der die Backen (13) voneinander weg gespreizt sind, um einen Hohlkörper (2) aufzunehmen oder freizugeben, und einer Greifposition, in der die Backen (13) einander angenähert sind und eine Aufnahme (14) für den Hohlkörper (2) definieren, um diesen zu umschließen;
eine magnetische Rückstellvorrichtung (17), umfassend mindestens ein Paar Magnete (18, 19) mit entgegengesetzter magnetischer Ausrichtung, die fähig sind, die Backen (13) in Richtung ihrer Freigabeposition oder, umgekehrt, in Richtung ihrer Greifposition zu belasten;
wobei die magnetische Rückstellvorrichtung (17) mindestens einen festen Magneten (18), der fest mit dem Zangenkörper (12) verbunden ist und eine Magnetachse (M1) aufweist, die parallel zur Rotationsachse (A1, A2) der Backen (13) ist, und mindestens einen beweglichen Magneten (19), der mit mindestens einer der Backen (13) gekoppelt ist und eine Magnetachse (M2) aufweist, die parallel zur Rotationsachse (A1, A2) der Backen (13) ist, umfasst;
und wobei jeder bewegliche Magnet (19) relativ zum Zangenkörper (12) verlagerbar ist zwischen einer ersten Endposition, in der der bewegliche Magnet (19) relativ zum festen Magneten (18) versetzt ist und mindestens eine der Backen (13) in ihre Freigabeposition belastet, und einer zweiten Endposition, in der der bewegliche Magnet (19) relativ zum festen Magneten (18) in einer zur ersten Endposition entgegengesetzten Richtung versetzt ist und mindestens diese Backe (13) in Richtung ihrer Greifposition belastet,
**dadurch gekennzeichnet, dass** jede Backe (13) einen beweglichen Magneten (19) trägt und mit einem Hebel (35) fest verbunden ist, der in der Greifposition der Backe (13) aus der Aufnahme (14) zurückgezogen ist und der in der Freigabeposition der Backe (13) in die Aufnahme (14) ragt.

## Claims

1. Gripper (9) for grasping a hollow body (2), which comprises:
- a gripper body (12);
- a pair of jaws (13) mounted in an articulated manner with respect to the gripper body (12) about respective parallel axes (A1, A2) of rotation, between a releasing position, in which the jaws (13) are spaced apart from one another to receive or release a hollow body (2), and a grasping position, in which the jaws (13) have been moved towards one another and define a housing (14) for the hollow body (2) in order to clamp the latter;
- a magnetic return device (17) comprising at least one pair of magnetically opposed magnets (18, 19) that are able to urge the jaws (13) towards their releasing position or, conversely, towards their grasping position;
- wherein the magnetic return device (17) comprises at least one fixed magnet (18) secured to the gripper body (12), having a magnetic axis (M1) parallel to the axis (A1, A2) of rotation of the jaws (13), and at least one movable magnet (19) coupled to at least one of the jaws (13), having a magnetic axis (M2) parallel to the axis (A1, A2) of rotation of the jaws (13);
- and wherein each movable magnet (19) is movable with respect to the gripper body (12) between a first end position, in which the movable magnet (19) is off-centre with respect to the fixed magnet (18) and urges at least one of the jaws (13) towards its releasing position, and a second end position, in which the movable magnet (19) is off-centre with respect to the fixed magnet (18) in an opposite direction to the first end position and urges at least this jaw (13) towards its grasping position, **characterized in that** it comprises:
- an actuator (20) bearing the movable magnet (19), this actuator (20) being movable in translation with respect to the gripper body (12) between an extended position, corresponding to the releasing position of the jaws (13), in which a front end (29) of the actuator (20) projects into the housing (14), and a retracted position, corresponding to the grasping position of the jaws (13), in which the actuator (20) is set back from the housing (14);
- a pair of link rods (21) coupling each of the jaws (13) to the actuator (20) .

2. Gripper (9) according to the preceding claim, **characterized in that** each link rod (21) is articulated with respect to a jaw (13) by an outer end (23) and is articulated with respect to the actuator (20) by an inner end (24).

3. Gripper (9) according to the preceding claim, **characterized in that** the link rods are articulated about a common axis with respect to the actuator (20) by their inner ends (24).

4. Gripper (9) according to one of the preceding claims, **characterized in that** the magnetic return device (17) comprises a pair of fixed magnets (18) disposed on either side of the actuator (20), facing the movable magnet (19).

5. Gripper (9) according to the preceding claim, **characterized in that** the movable magnet (19) is spherical.

6. Gripper (9) according to one of the preceding claims, **characterized in that** it comprises a roller (33) secured to the actuator (20) and able to interact with a cam (34).

7. Gripper (9) for grasping a hollow body (2), which comprises:
a gripper body (12);
a pair of jaws (13) mounted in an articulated manner with respect to the gripper body (12) about respective parallel axes (A1, A2) of rotation, between a releasing position, in which the jaws (13) are spaced apart from one another to receive or release a hollow body (2), and a grasping position, in which the jaws (13) have been moved towards one another and define a housing (14) for the hollow body (2) in order to clamp the latter;
a magnetic return device (17) comprising at least one pair of magnetically opposed magnets (18, 19) that are able to urge the jaws (13) towards their releasing position or, conversely, towards their grasping position;
wherein the magnetic return device (17) comprises at least one fixed magnet (18) secured to the gripper body (12), having a magnetic axis (M1) parallel to the axis (A1, A2) of rotation of the jaws (13), and at least one movable magnet (19) coupled to at least one of the jaws (13), having a magnetic axis (M2) parallel to the axis (A1, A2) of rotation of the jaws (13);
and wherein each movable magnet (19) is movable with respect to the gripper body (12) between a first end position, in which the movable magnet (19) is off-centre with respect to the fixed magnet (18) and urges at least one of the jaws (13) towards its releasing position, and a second end position, in which the movable magnet (19) is off-centre with respect to the fixed magnet (18) in an opposite direction to the first end position and urges at least this jaw (13) towards its grasping position,
**characterized in that** each jaw (13) bears a movable magnet (19) and is secured to a lever (35) which, in the grasping position of the jaw (13), is set back from the housing (14) and which, in the releasing position of the jaw (13), projects into the housing (14).
